(19) **Europäisches Patentamt / European Patent Office / Office européen des brevets**

(11) **EP 4 391 612 A1**

(12) # EUROPEAN PATENT APPLICATION
published in accordance with Art. 153(4) EPC

(43) Date of publication:
**26.06.2024 Bulletin 2024/26**

(21) Application number: **22869339.6**

(22) Date of filing: **15.09.2022**

(51) International Patent Classification (IPC):
***H04W 8/24*** *(2009.01)*

(52) Cooperative Patent Classification (CPC):
**H04W 8/24; H04W 24/02;** Y02D 30/70

(86) International application number:
**PCT/CN2022/119070**

(87) International publication number:
**WO 2023/040971 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2021 CN 202111112900**

(71) Applicant: **Huawei Technologies Co., Ltd.
Shenzhen, Guangdong 518129 (CN)**

(72) Inventors:
- **SUN, Yan
  Shenzhen, Guangdong 518129 (CN)**
- **CHAI, Xiaomeng
  Shenzhen, Guangdong 518129 (CN)**
- **WU, Yiqun
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD, APPARATUS AND SYSTEM FOR DOWNLOADING ARTIFICIAL INTELLIGENCE MODEL**

(57) This application provides an artificial intelligence model download method, an apparatus, and a system. The method includes: A terminal device receives model feedback information from an access network device, where the model feedback information indicates a download mode that is of a first artificial intelligence model and that is configured for the terminal device, and the download mode that is of the first artificial intelligence model and that is configured for the terminal device is a download mode supported by the terminal device. The terminal device may download the first artificial intelligence model in the download mode indicated by the model feedback information. According to the foregoing method, a network device configures, for the terminal device by using the model feedback information, the download mode that can be supported by the terminal device, so that the terminal device can download the first artificial intelligence model supported by the terminal device, to avoid a case in which a downloaded artificial intelligence model cannot be used.

FIG. 3

**Description**

**CROSS-REFERENCE TO RELATED APPLICATIONS**

This application claims priority to Chinese Patent Application No. 202111112900.1, filed with the China National Intellectual Property Administration on September 18, 2021 and entitled "ARTIFICIAL INTELLIGENCE MODEL DOWNLOAD METHOD, APPARATUS, AND SYSTEM", which is incorporated herein by reference in its entirety.

**TECHNICAL FIELD**

This application relates to the field of communication technologies, and in particular, to an artificial intelligence model download method, an apparatus, and a system.

**BACKGROUND**

In a wireless communication network, for example, in a mobile communication network, services supported by the network are increasingly diversified, and therefore requirements that need to be met are increasingly diversified. For example, the network needs to be able to support ultra-high rates, ultra-low latency, and/or ultra-large connections. This feature makes network planning, network configuration, and/or resource scheduling increasingly complex. In addition, because a network function is increasingly powerful, for example, supporting an increasingly high spectrum and supporting new technologies such as a high-order multiple-input multiple-output (multiple-input multiple-output, MIMO) technology, beamforming, and/or beam management, network energy saving becomes a hot research topic. These new requirements, scenarios, and features bring unprecedented challenges to network planning, operation and maintenance, and efficient operation. To meet this challenge, an artificial intelligence technology may be introduced into a wireless communication network, to implement network intelligence. Based on this, how to effectively implement artificial intelligence in a network is a problem worth studying.

**SUMMARY**

This application provides an artificial intelligence model download method, an apparatus, and a system, to implement how a terminal device can obtain, from a network side, an artificial intelligence model supported by the terminal device.

According to a first aspect, this application provides an artificial intelligence model download method. The method is used to implement a function on a terminal device side. For example, the method may be applied to a terminal device or a chip in the terminal device. A specific execution body of the method is not limited in this embodiment of this application. Optionally, the method may be jointly implemented by a plurality of functional modules on the terminal device side, and a method performed by each functional module also falls within the protection scope of this application. For example, the method is applied to the terminal device. In the method, the terminal device receives model feedback information from an access network device, the model feedback information indicates a download mode that is of a first artificial intelligence model and that is configured for the terminal device, and the download mode that is of the first artificial intelligence model and that is configured for the terminal device is a download mode supported by the terminal device. The terminal device may download the first artificial intelligence model in the download mode indicated by the model feedback information.

According to the foregoing method, a network device configures, for the terminal device by using the model feedback information, the download mode that can be supported by the terminal device, so that the terminal device can download the first artificial intelligence model supported by the terminal device, to avoid a case in which a downloaded artificial intelligence model cannot be used.

In a possible design, the method includes: sending model capability information to the access network device, where the model capability information indicates a download mode that is of an artificial intelligence model and that is supported by the terminal device.

According to the foregoing method, the terminal device reports the model capability information, indicates the download mode that is of the artificial intelligence model and that is supported by the terminal device, and implements negotiation with the access network device on the download mode of the artificial intelligence model, so that the access network device can provide the artificial intelligence model for the terminal device based on the download mode that is of the artificial intelligence model and that is supported by the terminal device, to avoid a case in which the terminal device cannot obtain an appropriate artificial intelligence model when a machine learning model operator package and a format of an artificial intelligence model on a network side do not match an operator package and a format of the artificial intelligence model that are supported by the terminal.

In a possible design, the download mode indicated by the model capability information includes at least one of a first download mode to an M$^{th}$ download mode, where an i$^{th}$ download mode indicates that the terminal device supports an artificial intelligence model in an i$^{th}$ format, a value of i ranges from 1 to M, and M is an integer greater than or equal to 1.

According to the foregoing method, the terminal device may indicate, by using the model capability information, an artificial intelligence model in which format that the terminal device supports, so that the access network device can accurately provide an artificial intelligence model in a corresponding format.

In a possible design, the download mode indicated by the model capability information includes at least one of the following: a download mode 1 of downloading an artificial intelligence model in a specified format, where the artificial intelligence model in the specified format is the artificial intelligence model supported by the terminal device; a download mode 2 of downloading computer code that describes an artificial intelligence model; and a download mode 3 of downloading an artificial intelligence model in an intermediate format, where the terminal device supports the artificial intelligence model in the intermediate format, and the artificial intelligence model in the intermediate format can be converted into an artificial intelligence model in a format supported by the terminal device.

According to the foregoing method, the terminal device reports, based on a capability of the terminal device, the download mode supported by the terminal device, so that the access network device can accurately provide the artificial intelligence model in the corresponding format.

In a possible design, the specified format is included in M formats, the M formats are M formats of the artificial intelligence model supported by the terminal device, and M is an integer greater than or equal to 1.

In a possible design, the model capability information further indicates the specified format.

In a possible design, the model capability information further indicates parameter information corresponding to the download mode 1. The parameter information corresponding to the download mode 1 includes model framework format information and/or operator package information. The model framework format information indicates at least one of a name of a model framework corresponding to the artificial intelligence model, a version number of the model framework, and a model file format of the artificial intelligence model. The operator package information indicates an operator unit set of the artificial intelligence model. The parameter information can enable the access network device to learn of the parameter information of the download mode 1 supported by the terminal, and therefore to provide an artificial intelligence model that matches the parameter information, so that the terminal device can obtain the artificial intelligence model supported by the terminal device.

In a possible design, the model capability information further indicates parameter information corresponding to the download mode 2. The parameter information corresponding to the download mode 2 includes at least one of a name of a programming language of the computer code that describes the artificial intelligence model and a version number of the programming language. The parameter information can enable the access network device to learn of the parameter information of the download mode 2 supported by the terminal, and therefore to provide computer code that matches the parameter information, so that the terminal device can obtain the computer code that describes the artificial intelligence model and that is supported by the terminal device.

In a possible design, the model capability information further indicates parameter information corresponding to the download mode 3. The parameter information corresponding to the download mode 3 includes at least one of a format name of the intermediate format and a version number of the intermediate format. The parameter information can enable the access network device to learn of the parameter information of the download mode 3 supported by the terminal, and therefore to provide an artificial intelligence model in an intermediate format that matches the parameter information, so that the terminal device can obtain the artificial intelligence model in the intermediate format supported by the terminal device.

In a possible design, model requirement information is sent to the access network device, where the model requirement information is used to trigger downloading of the first artificial intelligence model.

In a possible design, the model requirement information further indicates at least one of the following information: a function type of the first artificial intelligence model; application scenario information of the first artificial intelligence model; information about time at which the first artificial intelligence model is requested to be used; validity time information of the model requirement information; and a stored artificial intelligence model. The model requirement information can enable the access network device to learn of a function, an application scenario, and a requirement time period of an artificial intelligence model that are required by the terminal, and the stored artificial intelligence model, so that an artificial intelligence model that matches the requirement information can be provided in a timely, correct, and efficient manner. In addition, optionally, an existing model of the terminal may be prevented from being repeatedly downloaded.

In a possible design, the model feedback information further indicates at least one of the following information: effective time information of the first artificial intelligence model; a model download license for downloading the first artificial intelligence model; the function type of the first artificial intelligence model; and the application scenario information of the first artificial intelligence model. The model feedback information can enable the terminal device to obtain an effective time period, a download license, a model function, and an application scenario that are of the artificial intelligence model and that are provided by the access network device, so that the model can be downloaded within a valid time period, and the model can be applied to a correct scenario.

In a possible design, the terminal device receives download address information from the access network device, where the download address information indicates a download address of the first artificial intelligence model. The first artificial intelligence model is downloaded based on the download address.

In a possible design, there is a correspondence between the download mode indicated by the model feedback information and the download address information. The terminal device uses, based on the download mode indicated by the model feedback information, a model downloaded from the download address.

According to a second aspect, this application provides an artificial intelligence model download method. The method is used to implement a function on an access network device side. For example, the method may be applied to an access network device or a chip in the access network device. A specific execution body of the method is not limited in this embodiment of this application. Optionally, the method may be jointly implemented by a plurality of functional modules on the access network device side through interaction, and a method performed by each functional module also falls within the protection scope of this application. For example, the method is applied to the access network device. In the method, the access network device sends model feedback information to a terminal device, where the model feedback information indicates a download mode that is of a first artificial intelligence model and that is configured for the terminal device, and the download mode that is of the first artificial intelligence model and that is configured for the terminal device is a download mode supported by the terminal device.

In a possible design, the access network device receives model capability information from the terminal device, where the model capability information indicates a download mode that is of an artificial intelligence model and that is supported by the terminal device.

In a possible design, model requirement information is received from the terminal device, where the model requirement information is used to trigger downloading of the first artificial intelligence model.

For descriptions of the model feedback information, the model capability information, and the model requirement information, refer to the first aspect. Details are not described herein again.

According to a third aspect, this application provides an artificial intelligence model download method. The method is used to implement a function on a model providing device (which may also be referred to as a model provider) side, for example, may be applied to the model providing device or a chip in the model providing device. A specific execution body of the method is not limited in this embodiment of this application. Optionally, the method may be jointly implemented by a plurality of functional modules on the model providing device side through interaction, and a method performed by each functional module also falls within the protection scope of this application. For example, the method is applied to the model providing device. In the method, the model providing device receives a model obtaining request message from a terminal device, where the model obtaining request message may request to download a first artificial intelligence model in a download mode indicated by model feedback information; and sends a model obtaining acknowledgment message to the terminal device, where the model obtaining acknowledgment message includes model information of the first artificial intelligence model corresponding to the download mode indicated by the model feedback information.

According to a fourth aspect, this application provides a system, including at least two of a terminal device, an access network device, and a model providing device.

The access network device is configured to send model feedback information to the terminal device, where the model feedback information indicates a download mode and download address information that is of a first artificial intelligence model and that is configured for the terminal device, the download address information indicates a download address of the first artificial intelligence model, and the download mode that is of the first artificial intelligence model and that is configured for the terminal device is a download mode supported by the terminal device.

The terminal device is configured to: receive the model feedback information from the access network device; download the first artificial intelligence model in the download mode that is of the first artificial intelligence model and that is configured for the terminal device; and send a model obtaining request message to the model providing device corresponding to the download address information, where the model obtaining request message may request to download the first artificial intelligence model in the download mode indicated by the model feedback information.

The model providing device is configured to send a model obtaining acknowledgment message to the terminal device, where the model obtaining acknowledgment message includes model information of the first artificial intelligence model corresponding to the download mode indicated by the model feedback information.

According to a fifth aspect, an embodiment of this application provides a communication apparatus. The communication apparatus may be a terminal device, a module that can implement a function on a terminal device side, or a chip that can be disposed inside the terminal device. The communication apparatus has a function of implementing the first aspect. For example, the communication apparatus includes a corresponding module, unit, or means (means) for performing some or all steps in the first aspect. The function, the unit, or the means may be implemented by software, may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from an access network device. The processing unit may be configured to perform some internal operations of the communication apparatus. Functions performed by the processing unit and the communication unit may correspond to the operations in the first aspect.

In a possible design, the communication apparatus includes a processor, and may further include a transceiver. The transceiver is configured to receive and send a signal, and the processor completes the method according to any one of the possible designs or implementations of the first aspect by using the transceiver. The communication apparatus may further include one or more memories. The memory is configured to be coupled to the processor, and the memory may store a computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes the processor, and the processor may be configured to be coupled to the memory. The memory may store the computer program or the instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes the processor and an interface circuit, and the processor is configured to communicate with another apparatus through the interface circuit, and perform the method according to any one of the possible designs or implementations of the first aspect.

According to a sixth aspect, an embodiment of this application provides a communication apparatus. The communication apparatus may be an access network device, a module that can implement a function on an access network device side, or a chip that can be disposed inside the access network device. The communication apparatus has a function for implementing the second aspect. For example, the communication apparatus includes a corresponding module, unit, or means for performing some or all operations in the second aspect. The module, unit, or means may be implemented by software, maybe implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive uplink information from a terminal device. The processing unit may be configured to perform some internal operations of the communication apparatus. Functions performed by the processing unit and the communication unit may correspond to the operations in the second aspect.

In a possible design, the communication apparatus includes a processor, and may further include a transceiver. The transceiver is configured to receive and send a signal, and the processor completes the method according to any one of the possible designs or implementations of the second aspect by using the transceiver. The communication apparatus may further include one or more memories. The memory is configured to be coupled to the processor, and the memory may store a computer program or instructions for implementing the function in the second aspect. The processor may execute the computer program or the instructions stored in the memory. When the computer program or the instructions are executed, the communication apparatus is enabled to implement the method in any one of the possible designs or implementations of the second aspect.

In a possible design, the communication apparatus includes the processor, and the processor may be configured to be coupled to the memory. The memory may store the computer program or the instructions for implementing the function in the second aspect. The processor may execute the computer program or the instructions stored in the memory. When the computer program or the instructions are executed, the communication apparatus is enabled to implement the method in any one of the possible designs or implementations of the second aspect.

In a possible design, the communication apparatus includes the processor and an interface circuit, and the processor is configured to communicate with another apparatus through the interface circuit, and perform the method according to any one of the possible designs or implementations of the second aspect.

It may be understood that the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a seventh aspect, an embodiment of this application provides a communication system. The communication system includes the communication apparatus according to the fifth aspect and the communication apparatus according to the sixth aspect.

According to an eighth aspect, an embodiment of this application provides a computer-readable storage medium. The computer storage medium stores a computer-readable instruction. When a computer reads and executes the computer-readable instruction, the computer is enabled to implement the method in any possible design of the first aspect to the third aspect.

According to a ninth aspect, an embodiment of this application provides a computer program product. When a computer reads and executes the computer program product, the computer is enabled to implement the method in any one of the possible designs of the first aspect to the third aspect.

According to a tenth aspect, an embodiment of this application provides a chip. The chip includes a processor, and the processor is coupled to a memory, and is configured to read and execute a software program stored in the memory, to implement the method according to any one of the possible designs of the first aspect to the third aspect.

According to an eleventh aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method in the first aspect and any possible implementation of the first aspect by using a logic circuit or executing a computer program or instructions.

According to a twelfth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method in the second aspect and any possible implementation of the second aspect by using a logic circuit or executing a computer program or instructions.

According to a thirteenth aspect, a communication apparatus is provided, including a processor and a memory. The processor is coupled to the memory, and the processor is configured to execute a computer program or instructions stored in the memory, so that the communication apparatus implements the method in the first aspect and any possible implementation of the first aspect.

According to a fourteenth aspect, a communication apparatus is provided, including a processor and a memory. The processor is coupled to the memory, and the processor is configured to execute a computer program or instructions stored in the memory, so that the communication apparatus implements the method in the second aspect and any possible implementation of the second aspect.

According to a fifteenth aspect, a chip is provided. The chip includes a processor, and may further include a memory, configured to execute a computer program or instructions stored in the memory, so that the chip system implements the method in the first aspect and any possible implementation of the first aspect.

According to a sixteenth aspect, a chip is provided. The chip includes a processor, and may further include a memory, configured to execute a computer program or instructions stored in the memory, so that the chip system implements the method in the second aspect and any possible implementation of the second aspect.

These aspects or other aspects of this application are more brief and comprehensible in descriptions of the following embodiments.

## BRIEF DESCRIPTION OF DRAWINGS

FIG. 1 is a schematic diagram of an architecture of a communication system applicable to this disclosure;
FIG. 2 is a schematic diagram of an artificial intelligence model according to this disclosure;
FIG. 3 is a schematic flowchart of an artificial intelligence model download method according to this disclosure;
FIG. 4 is a schematic flowchart of an artificial intelligence model download method according to this disclosure;
FIG. 5 is a schematic diagram of a structure of a communication apparatus according to this disclosure; and
FIG. 6 is a schematic diagram of a structure of a communication apparatus according to this disclosure.

## DESCRIPTION OF EMBODIMENTS

The following describes this disclosure in detail with reference to accompanying drawings in this specification.

The technical solutions of this disclosure may be applied to various communication systems, for example, a long term evolution (long term evolution, LTE) system, a 5th generation (5th generation, 5G) mobile communication system, or a next generation mobile communication system. This is not limited herein. The 5G system may also be referred to as a new radio (new radio, NR) system.

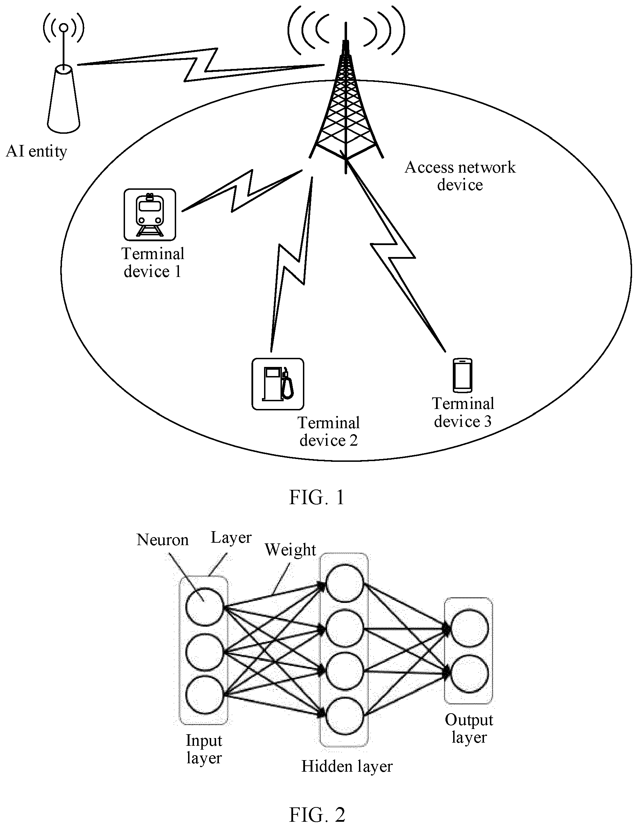

For ease of understanding this disclosure, a communication system applicable to this disclosure is first described in detail by using a communication system shown in FIG. 1 as an example. FIG. 1 is a schematic diagram of an architecture of a provided communication system applicable to this disclosure. The communication system includes an access network device and a terminal device. The terminal device may establish a connection to the access network device, and communicate with the access network device. In the communication system, a terminal device 1 to a terminal device 3 may send uplink data to the access network device, and the access network device may send configuration information to the terminal device 1 to the terminal device 3. In addition, the terminal devices may form a communication system. For example, in an internet of vehicles system, the terminal device 1 sends data to the terminal device 2, and the terminal device 2 receives the data sent by the terminal device 1. In FIG. 1, three terminal devices are used as an example. A quantity of access network devices and a quantity of terminal devices included in the communication system are not limited in this disclosure.

In this disclosure, the terminal device may be a device having a wireless transceiver function or a chip that may be disposed in any device, or may be referred to as user equipment (user equipment, UE), an access terminal, a subscriber unit, a subscriber station, a mobile station, a mobile console, a remote station, a remote terminal, a mobile device, a user terminal, a wireless communication device, a user agent, or a user apparatus. The terminal device in this disclosure may be a mobile phone (mobile phone), a tablet computer (Pad), a computer with a wireless transceiver function, a virtual reality (virtual reality, VR) terminal, an augmented reality (augmented reality, AR) terminal, a wearable device, a vehicle, an unmanned aerial vehicle, a helicopter, aircraft, a ship, a robot, a robot arm, a smart home device, or the like. The terminal device in this disclosure may be widely applied to communication in various scenarios, for example, including but not limited to at least one of the following scenarios: device-to-device (device-to-device, D2D), vehicle to everything (vehicle to everything, V2X), machine-type communication (machine-type communication, MTC), internet of things (internet of things, IOT), virtual reality, augmented reality, industrial control, self-driving, telemedicine, smart grid, smart furniture, smart office, smart wearable, smart transportation, or smart city. A specific technology and a specific device form that are used by the terminal are not limited in this disclosure.

In this disclosure, an apparatus configured to implement a function of the terminal may be a terminal, or may be an apparatus that can support the terminal in implementing the function, for example, a chip system, a hardware circuit, a software module, or a hardware circuit plus a software module. The apparatus may be installed in the terminal or may be used in matching with the terminal. For ease of description, the following describes the technical solutions provided in this disclosure by using an example in which the apparatus configured to implement the function of the terminal is the terminal.

The access network device may be a base station (base station), an evolved base station (evolved base station, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like, or may be a module or unit that completes some functions of the base station, for example, may be a central unit (central unit, CU), a distributed unit (distributed unit, DU), a CU control plane (CU control plane, CU-CP) module, or a CU user plane (CU user plane, CU-UP) module. The access network device may be a macro base station, may be a micro base station or an indoor base station, or may be a relay node or a donor node. A specific technology and a specific device form that are used by the access network device are not limited in this disclosure.

(1) Protocol layer structure.

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as the PDCP layer, the RLC layer, the MAC layer, and the physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

(2) Central unit (central unit, CU) and distributed unit (distributed unit, DU).

An access device may include the CU and the DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F 1-U. Specific names of the interfaces are not limited in this disclosure. The CU and the DU may be obtained through division based on a protocol layer of a wireless network. For example, functions of a PDCP layer and a protocol layer above the PDCP layer are set on the CU, and functions of a protocol layer below the PDCP layer (for example, an RLC layer and a MAC layer) are set on the DU. For another example, functions of the protocol layer above the PDCP layer are set on the CU, and functions of the PDCP layer and the protocol layer below the PDCP layer are set on the DU. This is not limited.

The foregoing division of the processing functions of the CU and the DU based on protocol layer is merely an example, and there may also be other division manners. For example, the CU or the DU may have functions of more protocol layers through division. For another example, the CU or the DU may alternatively have some processing functions of the protocol layer through division. In a design, some functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on a service type or other system requirements. For example, the division is performed based on latencies. Functions whose processing time needs to satisfy a latency requirement are set on the DU, and functions whose processing time does not need to satisfy the latency requirement are set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be obtained through division at a physical layer (physical layer, PHY). For example, the DU may implement higher-layer functions of the PHY layer, and the RU may implement lower-layer functions of the PHY layer. When the DU and the RU are used for sending, a function of the PHY layer may include at least one of the following: cyclic redundancy check (cyclic redundancy check, CRC) code addition, channel encoding, rate matching, scrambling, modulation, layer mapping, precoding, resource mapping, physical antenna mapping, or a radio frequency sending function. When the DU and the RU are used for receiving, the function of the PHY layer may include at least one of the following: CRC check, channel decoding, de-rate matching, descrambling, demodulation, layer demapping, channel detection, resource demapping, physical antenna demapping, or the radio frequency receiving function. The higher-layer functions of the PHY layer may include some functions of the PHY layer. For example, the some functions are closer to the MAC layer. The lower-layer function of the PHY layer may include some other functions of the PHY layer. For example, the some other functions are closer to the frequency receiving function. For example, the higher-layer functions of the PHY layer may include the CRC code addition, the channel encoding, the rate matching, the scrambling, the modulation, and the layer mapping, and the lower-layer function of the PHY layer may include the precoding, the resource mapping, the physical antenna mapping, and the radio frequency sending function. Alternatively, the higher-layer function of the PHY layer may include the CRC code addition, the channel encoding, the rate matching, the scrambling, the modulation, the layer mapping, and the precoding, and the lower-layer function of the PHY layer may include the resource mapping, the physical antenna mapping, and the radio frequency sending function. For example, the higher-layer functions of the PHY layer may include the CRC check, the channel decoding, the de-rate matching, the decoding, the demodulation, and the layer demapping, and the lower-layer function of the PHY layer may include the channel detection, the resource demapping, the physical antenna demapping, and the radio frequency receiving. Alternatively, the higher-layer function of the PHY layer may include the CRC check, the channel decoding, the de-rate matching, the decoding, the demodulation, the layer demapping, and the channel detection, and the lower-layer function of the PHY layer may include resource the demapping, the physical antenna demapping, and the radio frequency receiving function.

For example, a function of the CU may be implemented by one entity, or may be implemented by different entities. For example, the function of the CU may be further divided, to be specific, a control plane and a user plane are separated and implemented by using different entities: a control plane CU entity (namely, a CU-CP entity) and a user plane CU entity (namely, a CU-UP entity). The CU-CP entity and the CU-UP entity may be coupled to the DU, to jointly complete a function of the access network device.

Optionally, any one of the DU, the CU, the CU-CP, the CU-UP, and the RU may be a software module, a hardware structure, or a combination of a software module and a hardware structure. This is not limited. Different entities may exist in different forms, which is not limited. For example, the DU, the CU, the CU-CP, and the CU-UP are software modules, and the RU is a hardware structure. These modules and methods executed by the modules also fall within the protection scope of this disclosure.

In a possible implementation, the access network device includes the CU-CP, the CU-UP, the DU, and the RU. For example, this disclosure is executed by the DU, or the DU and the RU, or the CU-CP, the DU, and the RU, or the CU-UP, the DU, and the RU. This is not limited. Methods performed by each module also fall within the protection scope of this disclosure.

In this disclosure, an apparatus configured to implement a function of the access network device may be the access network device, or may be an apparatus that can support the access network device in implementing the function, for example, a chip system. The apparatus may be installed in the access network device or used in a matching manner with the access network device. In the following disclosure, an example in which the apparatus configured to implement the function of the access network device is the access network device, and the access network device is a base station is used to describe the technical solutions provided in this disclosure.

A quantity of access network devices and a quantity of terminal devices are not limited.

In a possible implementation, to support artificial intelligence in a wireless network, an independent artificial intelligence (artificial intelligence, AI) entity (for example, which is referred to as an AI network element or an AI node) may be introduced into a communication system to implement an AI-related operation. The AI entity may be directly connected to the access network device in the communication system, or may be indirectly connected to the access network device by using a third-party network element. The third-party network element may be a core network element, for example, an authentication management function (authentication management function, AMF) network element or a user plane function (user plane function, UPF) network element. Alternatively, to support the artificial intelligence in the wireless network, the AI entity (or may be referred to as an AI function or an AI module) may be configured in another network element in the communication system to implement the AI-related operation. For example, the another network element may be the access network device (for example, a gNB), a core network device, or a network management device (operation, administration, and maintenance, OAM). In this case, a network element that performs the AI-related operation is a network element with a built-in AI function.

In this disclosure, the OAM is configured to operate, manage, and/or maintain the core network device, and/or is configured to operate, manage, and/or maintain the access network device. An AI model is a specific method for implementing an AI function. The AI model represents a mapping relationship between an input and an output of a model. The AI model may be a neural network or another machine learning model. The AI model may be briefly referred to as a model. The AI-related operation may include at least one of the following: data collection, model training, model information release, model inference (model inference), inference result release, or the like.

In FIG. 1, an example in which an AI entity is an independent network element is used. The AI entity may communicate with an access network device and a terminal device.

In a wireless communication system, applying an AI model can significantly improve performance of the communication system. Because an AI model training process has a high requirement on computing power, an AI model used by the terminal device is generally managed by the network side. When the terminal device needs to use the AI model, the terminal device downloads the corresponding AI model from the network side.

Although a model download solution is simple and easy to understand, it has many problems in actual application. Due to booming development of the machine learning field, there are various types of machine learning development frameworks, such as Tensorflow and Pytorch used for a network-side server and lightweight frameworks CoreML and TFLite used for the terminal device. The frameworks have a large quantity of users, but AI model operator packages of the model frameworks are different. As a result, formats of trained models are incompatible with each other and cannot be interpreted. For example, a model trained by using Tensorflow on the network side cannot be used on a terminal device using CoreML.

In conclusion, how a terminal device can obtain, from a network side, an AI model in a format supported by the terminal device is an urgent problem to be resolved.

In this disclosure, a signaling interworking framework is proposed. The terminal device and the network side exchange some information, so that the terminal device can download an AI model that can be interpreted and used by the terminal device. This disclosure further proposes two new functional entities: a model manager and a model provider. In an actual system, the model manager may be an access network device on a network side. For example, the model manager may be a base station. The model provider may not be limited to a base station or a storage entity on the network side, and may be a third-party entity that has a capability of storing and training an AI model. Specific names of the model manager and the model provider are not limited in this disclosure. For example, the model manager may be referred to as a first device or a first network device, and the model provider may be referred to as a second device or a second network device. This is not limited. For example, refer to FIG. 1. The model manager may be the access network device in FIG. 1, and the model provider may be an AI entity in FIG. 1.

Before this disclosure is described, some knowledge related to artificial intelligence is first briefly described. Artificial intelligence can enable a machine to have human intelligence, for example, enable the machine to use computer software and hardware to simulate some intelligent human behavior. To achieve artificial intelligence, machine learning and various other methods may be used. For example, the machine learning includes a neural network. A deep neural network (deep neural network, DNN) is a mathematical model that simulates a behavior feature of an animal neural network and performs distributed parallel information processing, and is a special form of the AI model. According to the general approximation theorem, the neural network can approximate any continuous function in theory, so that the neural network has the capability of learning any mapping. Therefore, the neural network can accurately perform abstract modeling for a complex high-dimension problem. The idea of the neural network comes from the neuron structure of brain tissue. Each neuron performs a weighted summation operation on input values of the neuron, and outputs a result of the weighted summation through an activation function. It is assumed that an input of the neuron is $\mathbf{x} = [x_0, ..., x_n]$, a weight corresponding to the input is $w = [w_0, ... , w_n]$, and an offset of weighted summation is b. Forms of the activation function may be diversified. It is assumed that an activation function of a neuron is $y = f(z) = \max(0, z)$. An output of the neuron is

$$y = f\left(\sum_{i=0}^{i=n} w_i * x_i + b\right) = \max\left(0, \sum_{i=0}^{i=n} w_i * x_i + b\right)$$

. For another example, if an activation function of a neuron is $y = f(z) = z$, an output of the neuron is $y =$

$$f\left(\sum_{i=0}^{i=n} w_i * x_i + b\right) = \sum_{i=0}^{i=n} w_i * x_i + b$$

. b may be any possible value, for example, a decimal, an integer (including 0, a positive integer, a negative integer, or the like), or a complex number. Activation functions of different neurons in the neural network may be the same or different. The DNN generally has a multi-layer structure, and each layer of the DNN may include one or more neurons. An input layer of the DNN performs neuron processing on a received input, and then transfers a result to an intermediate hidden layer. The hidden layer then transfers a calculation result to an output layer or an adjacent hidden layer. Finally, the output layer obtains a final output result.

The DNN generally has more than one hidden layer, and the hidden layer usually directly affects a capability of extracting information and fitting a function. Increasing a quantity of hidden layers of the DNN or increasing a width of each layer (a quantity of included neurons) can improve a function fitting capability of the DNN. A model parameter is optimized by using a training process, so that a DNN network has a capability of extracting a data feature and expressing a mapping relationship. The DNN generally uses a supervised learning policy or an unsupervised learning policy to optimize the model parameter. In a DNN training process, a loss function may be defined. The loss function describes a difference between an output value of the DNN and an ideal target value. A specific form of the loss function is not limited in this disclosure. The DNN training process is a process of adjusting a DNN network parameter, for example, including at least one of the following parameters: a quantity of layers of the DNN, a width, a connection relationship between neurons at layers, weights of some or all neurons, offsets of some or all neurons, or activation functions of some or all neurons, so that a value of the loss function is less than a threshold or a target requirement is met, in other words, the difference between the output of the DNN and the ideal target value is as small as possible.

Based on a network construction mode, the DNN can be classified into a feedforward neural network (feedforward neural network, FNN), a convolutional neural network (convolutional neural networks, CNN), and a recursive neural network (recurrent neural network, RNN). FIG. 2 shows an FNN network, and a characteristic of the FNN network is that neurons at adjacent layers are completely connected.

The CNN is a neural network dedicated to processing data of a similar grid structure. For example, both time series data (timeline discrete sampling) and image data (two-dimensional discrete sampling) may be considered as the data of the similar grid structure.

The RNN is a kind of neural network using feedback time series information. An input of the RNN includes a new input value at a current moment and an output value at a previous moment. The RNN is suitable for obtaining a sequence feature having a time correlation, and is especially suitable for application such as speech recognition and channel encoding and decoding.

Because the AI model training process has a high requirement on computing power, an AI model is generally trained by the network side. When the terminal device needs to use the AI model, the terminal device downloads the corresponding AI model from the network side. This disclosure provides an artificial intelligence model download method. The network side may indicate a model download mode and optionally indicate a related parameter to the terminal device, so that the terminal device can obtain an AI model, and flexibility is high.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in this disclosure are merely used for differentiation for ease of description, and are not used to limit the scope of this disclosure. The sequence numbers of the foregoing processes do not mean execution sequences, and the execution sequences of the processes should be determined based on functions and internal logic of the processes.

The network architecture and the service scenario described in this disclosure are intended to describe the technical solutions of this disclosure more clearly, and do not constitute a limitation on the technical solutions provided in this disclosure. A person of ordinary skill in the art may understand that, with evolution of a network architecture and emergence of a new service scenario, the technical solutions provided in this disclosure are also applicable to a similar technical problem.

In this disclosure, the terminal device may actively request to the network side for downloading the AI model, or the network side may actively request the terminal device to download or update the AI model.

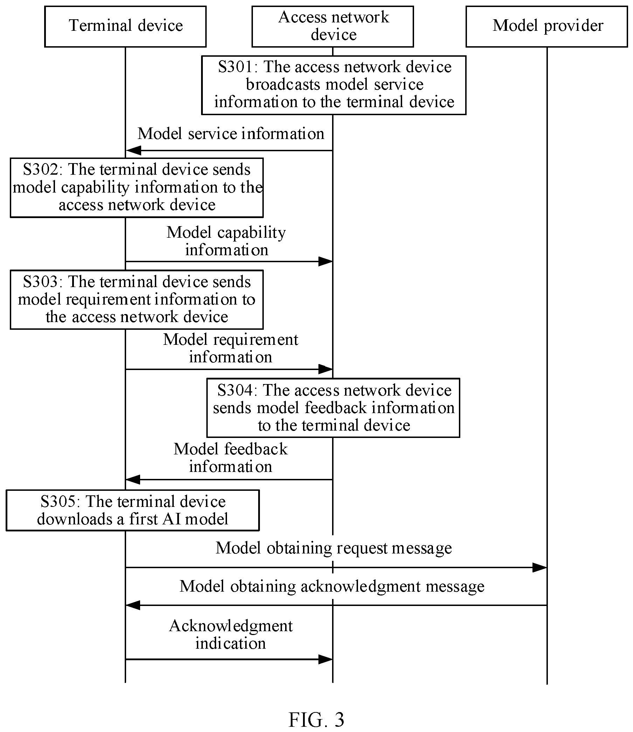

There may be various scenarios in which the terminal device actively requests to download the AI model. For example, the terminal device needs to improve air interface performance by using the AI model, and therefore the terminal device may request to download the AI model from the network side; the terminal device determines that a locally used AI model is no longer applicable to a current channel environment, and needs to update the AI model; the terminal device needs to perform performance calibration on the local AI model; and the terminal device needs to download a pre-trained model from the network side, and use a local dataset to train and optimize the pre-trained model online. When the terminal device actively requests to download the AI model, the AI model may be downloaded by using a procedure shown in FIG. 3.

FIG. 3 is a schematic flowchart of an artificial intelligence model download method according to this application. The procedure is described by using interaction between a terminal device and an access network device as an example. The method includes the following steps.

Optionally, S301: The access network device broadcasts model service information to the terminal device.

The model service information may indicate, from a candidate function, an index (or an identifier) of one or more functions that can be provided by a network side by using AI. For example, the candidate function includes at least one of the following: channel state information (channel state information, CSI) compression feedback, constellation modulation and demodulation, channel encoding and decoding, or uplink precoding. Each function is corresponding to an index (or an identifier). An index of each function (or a correspondence between a function and an index) may be agreed on in a protocol, or may be notified by the network side, for example, the access network device to a terminal in advance (for example, in a broadcast manner or another signaling configuration manner). This is not limited.

Alternatively, the model service information may indicate, from an AI model of a candidate type, an index (or an identifier) of one or more AI models that can be provided by the network side. The AI model of the candidate type includes at least one of the following: an AI model used for the CSI compression feedback, an AI model used for the constellation modulation and demodulation, an AI model used for the channel encoding and decoding, an AI model used for the uplink precoding, or the like. The AI model of each candidate category is corresponding to a unique index. The index of each AI model (or a correspondence between a type of an AI model and an index) may be agreed on in a protocol, or may be notified by the network side (for example, the access network device) to the terminal device in advance (for example, in the broadcast manner or another signaling configuration manner). This is not limited.

Optionally, content indicated by the model service information may be agreed on in the protocol, and S301 may not need to be performed.

Optionally, S302: The terminal device sends model capability information to the access network device, where the model capability information indicates a download mode that is of an AI model and that is supported by the terminal device.

In this disclosure, that the model capability information indicates the download mode that is of the AI model and that is supported by the terminal device may be understood as that the model capability information indicates a download mode that is of an AI model and that is expected by the terminal device. For example, if the terminal device actually supports L download modes, but only P of the L download modes are reported by using capability information, it may be understood from a perspective of the terminal device that the terminal device expects to use the P download modes for downloading. L and P are integers greater than or equal to 1, and P is less than or equal to L.

There are various types of model frameworks for machine learning, and AI model operator packages of the model frameworks are all different. As a result, formats of AI models trained using different model frameworks are also different.

In this disclosure, in an implementation, the download mode indicated by the model capability information includes at least one of a first download mode to an $M^{th}$ download mode. An $i^{th}$ download mode is corresponding to an AI model in an $i^{th}$ format. The $i^{th}$ download mode may indicate that the terminal device supports the AI model in the $i^{th}$ format. A value of i ranges from 1 to M, and M is an integer greater than or equal to 1.

AI models in M formats corresponding to the first download mode to the $M^{th}$ download mode may be AI models in the M formats supported by the terminal device. A correspondence between a download mode and a format may be agreed on in the protocol, or may be notified by the network side (for example, the access network device) to the terminal device in advance (for example, in the broadcast manner or another signaling configuration manner). This is not limited.

When downloading the AI model, the terminal device may report, by indicating one or more of the first download mode to the $M^{th}$ download mode, AI models that are in specific one or more formats of the AI models in the M formats and that the terminal device needs to download. When selecting the AI model for the terminal device, the access network device may select an AI model in the format that the terminal device needs to download.

For example, there are totally AI models in three formats: a ".pb" format, a ".pt" format, and a ".mindir" format. The ".pb" format is corresponding to the first download mode, the ".pt" format is corresponding to the second download mode, and the ".mindir" format is corresponding to the third download mode. When the terminal device needs to download an AI model in the ".pt" format or the supported ".pb" format, the model capability information may indicate the second download mode. The access network device may provide the AI model in the ".pt" format for the terminal device based on the second download mode indicated by the model capability information.

In another implementation, the download mode indicated by the model capability information may include at least one of the following:

a download mode 1 of downloading an AI model in a specified format;
a download mode 2 of downloading computer code that describes an AI model; or
a download mode 3 of downloading an AI model in an intermediate format, where the AI model in the intermediate format can be converted into an AI model in a format supported by the terminal device, for example, can be converted into an AI model in a specified format. The intermediate format may also be referred to as a conversion format or another name. This is not limited.

Optionally, the specified format is included in the M formats. The specified format may be one or more of the M formats, and M is an integer greater than or equal to 1. For example, the terminal device supports the AI models in the three formats: the ".pb" format, the ".pt" format, and the ".mindir" format. The specified format may be the ".pb" format, the ".pt" format, or the ".mindir" format. The specified format may alternatively include at least two formats of the ".pb" format, the ".pt" format, and the ".mindir" format.

Optionally, in this implementation, the model capability information may further indicate the specified format, for example, indicate the specified format from the M formats. The AI model in the intermediate format may be an AI model converted from an AI model in a format supported by the network side.

In this disclosure, the model capability information may further indicate parameter information corresponding to the download mode.

For example, parameter information corresponding to the download mode 1 may include model framework format information and/or operator package information. The model framework format information indicates at least one of a name of a model framework corresponding to the AI model, a version number of the model framework, and a model file format of the AI model. For example, for specific information indicated by the model framework format information, refer to Table 1. For example, the format supported by the terminal device may be at least one of three formats listed in Table 1.

**Table 1**

| Example | Name of the model framework | Version number of the model framework | Model file format |
|---|---|---|---|
| 1 | Tensorflow | 2.0.0 | .pb |
| 2 | Pytorch | 1.9.0 | .pt |
| 3 | Mindspore | 1.3.0 | .mindir |

In this disclosure, in a possible implementation, the operator package information indicates an operator unit set of the AI model supported by the terminal device. In another possible implementation, the operator package information may indicate an operator unit set of an AI model not supported by the terminal device. An operator of the AI model includes but is not limited to a one-dimensional CNN (conv1d) unit, a two-dimensional CNN (conv2d) unit, a three-dimensional CNN (conv3d) unit, a pooling (pooling), a sigmoid (sigmoid) activation function, and the like. The terminal device reports the operator package information, so that the network side can determine which operators in a model framework operator package can be supported by the terminal device, and an AI model delivered by the network side may not use an operator not supported by the terminal device, to ensure that an AI model that can be used by the terminal device can be provided for the terminal device.

In the download mode 2, to avoid a case in which the terminal device does not support a format of the AI model delivered by the network side, the terminal device may request to download the computer code that describes the AI model. After obtaining the computer code, the terminal device may perform local compilation, to obtain the AI model.

In the download mode 2, parameter information corresponding to the download mode 2 may include at least one of a name of a programming language corresponding to the computer code that describes the AI model and a version number of the programming language. For example, information indicated by the parameter information corresponding to the download mode 2 may be shown in Table 2.

**Table 2**

| Example | Name of the programming language | Version number of the programming language |
|---|---|---|
| 1 | C | C99 |
| 2 | C++ | C++17 |
| 3 | Python | 3.6 |

Information, for example, the name of the programming language and the version number of the programming language is indicated, so that the access network device can determine computer code corresponding to specific coding languages that can be compiled by the terminal device, to avoid delivering computer code that cannot be compiled by the terminal device.

In the download mode 3, the intermediate format may be a format of an AI model format supported by both the network side and a terminal device side, and AI models in various model frameworks supported by the network side and the terminal device may be translated or converted into the AI model in the intermediate format. The access network device and the terminal device can implement compatibility and interworking of the AI model as long as the access network device and the terminal device support such a unified intermediate format. For example, the intermediate format may be specifically an open neural network exchange (open neural network exchange, ONNX) format. The network side converts a trained AI model into an AI model in the ONNX format, and then delivers the AI model in the ONNX format to the terminal device. After receiving the AI model in the ONNX format, the terminal device converts the AI model into an AI model in a format corresponding to the model framework locally used by the terminal device, and then may use the AI model delivered by the network.

In this disclosure, parameter information corresponding to the download mode 3 includes at least one of a format name of the intermediate format and a version number of the intermediate format. For example, information indicated by the parameter information corresponding to the download mode 3 may be shown in Table 3.

**Table 3**

| Name of the intermediate format | Version number of the intermediate format | Format |
|---|---|---|
| ONNX | 1.5 | .onnx |
| ONNX | 1.2 | .onnx |
| ONNX | 1.0 | .onnx |

In this disclosure, the terminal device may further report other information. For example, the terminal device may further report capability information of the terminal device. The capability information indicates a capability of the terminal device, and includes but is not limited to at least one of the following:

a size of memory space of the terminal device;
a size of memory space that can be used by the terminal device to store an AI model; and
computing power information of the terminal device, where the computing power information may indicate a computing capability for running the AI model, for example, indicate at least one of the following: a type of a processor, a computing speed of the processor, a volume of data that can be processed by the processor, and other information, where for example, the type of the processor may be a graphics processing unit (graphics processing unit, GPU) or a central processing unit (central processing unit, CPU); and energy consumption information of the terminal device, for example, running power consumption of a chip and a battery capacity.

The terminal device may further report a network transmission protocol that is supported by the terminal device and that is used to download the AI model. For example, the network transmission protocol may be at least one of the transmission control protocol/internet protocol (transmission control protocol/internet protocol, TCP/IP), the internet protocol version 4 (internet protocol version 4, IPv4), or the IPv6. The network side may select an appropriate model provider and download address based on the network transmission protocol supported by the terminal device.

Optionally, for a terminal device or a terminal device in a system, it may be considered by default that the terminal device supports all download modes agreed on in the protocol, and may support all download modes supported by the access network device. In this case, S302 may not need to be performed. Alternatively, for a terminal device in one or more scenarios, for example, a massive machine-type communications (massive machine-type communications, mMTC) scenario, a telemedicine scenario, an industrial control scenario, an ultra-reliable low-latency communication (ultra-reliable low-latency communication, URLLC) scenario, and/or an enhanced mobile broadband (enhanced mobile broadband, eMBB) scenario, a download mode supported by the terminal device in each scenario may be agreed on in the protocol, and S302 may not need to be performed. A method in which S302 does not need to be performed is not limited in this disclosure.

S303: The terminal device sends model requirement information to the access network device.

The model requirement information is used to trigger downloading of a first AI model. When receiving the model requirement information, the access network device determines that the terminal device needs to download the AI model.

In this disclosure, the model requirement information may indicate at least one of the following information:

1. Function type of the first AI model or a type of the first AI model: may indicate a function of the AI model. For example, the function type of the first AI model may be an AI model used for CSI compression feedback, an AI model used for constellation modulation and demodulation, an AI model used for modulation and demodulation, an AI model used for channel encoding and decoding, an AI model used for uplink precoding, or the like. If one function type corresponds to one index, the model requirement information may indicate an index corresponding to the function type.

2. Application scenario information of the AI model: The information may further describe information about an AI model required by the terminal device, so that the network side can specifically deliver an AI model having a more adapted function. For example, the application scenario information may include at least one of the following:

a channel type to which the AI model is applicable, where for example, for an AI model of a CSI feedback compression function type, the terminal device may further report that the channel type to which the AI model is applicable is a cluster delay line 200 nanosecond (ns) type (cluster delay line 200 ns, CDLB200), a tapped delay line 100 ns type (tapped delay line 100 ns, TDLA100), or the like; and

a degree of sparseness of a channel to which the AI model is applicable in a time-frequency-angle domain; or a system parameter to which the AI model is applicable, for example, a quantity of antennas and bandwidth. The application scenario information of the AI model may also be referred to as, for example, a function parameter corresponding to a function type of the AI model, or another name. This is not limited in this disclosure.

3. Information about time at which the first AI model is requested to be used: The time information may indicate that the terminal device needs to use at least one of the following: start time, end time, and a time period (a time length) of the first AI model.

4. Validity time information of the model requirement information: The validity time information may indicate time in which the model requirement information is valid; and if time at which the network side receives the model requirement information of the terminal device exceeds validity time of the model requirement information due to a channel, scheduling, or the like, the network side may no longer deliver the AI model to the terminal device.

5. Stored AI models (or referred to as known AI models): The AI models may be set for the terminal device before delivery, delivered by the network side when the terminal device accesses a network, or downloaded from the network side before. Each AI model in the stored AI models may be distinguished by using a unique model identifier. A format of the identifier may be defined by the protocol, or may be customized by the network side. The terminal device reports the stored AI model, and the network side may determine whether a new AI model needs to be downloaded for the terminal device, or indicate the terminal device to reuse the stored AI model.

6. Identifier of the terminal device: For example, the identifier may be a radio network temporary identifier (radio network temporary identifier, RNTI) of the terminal device.

In this disclosure, a model manager (for example, the access network device) and the model provider may further exchange background information. For example, the model provider notifies the model manager of ready model information. The model manager sends a new model training task to the model provider, so that the model provider performs training and preparation. After receiving, from the model provider, confirmation information indicating that the model is ready, the model manager delivers model feedback information to the terminal device.

S304: The access network device sends the model feedback information to the terminal device.

The model feedback information may be generated by the access network device, or the model feedback information may be generated by another device and forwarded by the access network device. For example, the model provider generates the model feedback information, and the access network device forwards the model feedback information to the terminal device.

The model feedback information indicates a download mode that is of the first AI model and that is configured for the terminal device. The download mode that is of the first AI model and that is configured for the terminal device may also be referred to as a download mode of the terminal device for the first AI model, a download mode of the terminal device, or the like. The terminal device may determine, based on the indicated download mode, a specific format of a to-be-downloaded AI model. The download mode that is of the first AI model and that is configured for the terminal device is one or more download modes indicated by the model capability information. For example, the download mode that is of the first AI model and that is configured for the terminal device is the download mode 1, indicating that the terminal device is indicated to download an AI model in a specified format supported by the terminal device. When the model feedback information indicates a plurality of download modes, the terminal device may select any one of the download modes to download the first AI model.

In the foregoing method, the access network device may determine, based on the model capability information reported by the terminal device, a download mode that is of the AI model and that is supported by the terminal device. When determining, based on the model requirement information reported by the terminal device, that the terminal device needs to use the AI model, the access network device may determine, based on the download mode supported by the terminal device, a specific download mode, a specific model format, a specific AI model, or the like that needs to be provided for the terminal device to download the AI model. The access network device may indicate the foregoing content by using the model feedback information.

In an implementation, when the model capability information reported by the terminal device indicates that the download mode supported by the terminal device includes at least one of the first download mode to the $M^{th}$ download mode, the download mode indicated by the model feedback information may include one or more of the first download mode to the $M^{th}$ download mode.

For example, M=3, and formats corresponding to the first download mode to the third download mode indicated by the model capability information are respectively the ".pb" format, the ".pt" format, and the ".mindir" format. In this case, the download mode that is of the first AI model and that is configured for the terminal device may be indicating to download at least one of an AI model in the ".pb" format, an AI model in the ".pt" format, or an AI model in the ".mindir" format. The terminal device may select one format for downloading.

In another implementation, when the model capability information reported by the terminal device indicates that the download mode supported by the terminal device includes one or more of the download mode 1 to the download mode 3, the download mode indicated by the model feedback information may include one or more of the download mode 1 to the download mode 3.

For example, the model capability information indicates that the terminal device supports the download mode 1 to the download mode 3. When the download mode indicated by the model feedback information is the download mode 1, the terminal device may determine that the first AI model in the specified format is to be downloaded. When the download mode indicated by the model feedback information is the download mode 2, the terminal device may determine that computer code corresponding to the first AI model is to be downloaded. When the download mode indicated by the model feedback information is the download mode 3, the terminal device may determine that the first AI model in the intermediate format is to be downloaded.

Optionally, in addition to indicating the download mode that is of the first AI model and that is configured for the terminal device, the model feedback information may further indicate at least one of the following information:

Parameter information corresponding to the download mode that is of the first AI model and that is configured for the terminal device: For specific content of the parameter information, refer to the foregoing descriptions, and details are not described herein again.

Effective time information of the first AI model: may indicate, for example, at least one of the following: effective start time, effective end time, or an effective time length. When it is determined that time at which the terminal device receives the model feedback information exceeds effective time of the first AI model due to a network delay or the like, the terminal device may not download the AI model.

Download address information: The download address information indicates a download address of the first AI model, and the download address information may indicate an IP address of a device storing the first AI model, a uniform resource locator (uniform resource locator, URL) address, or the like. The terminal device may download the first AI model based on the download address information. There may be a correspondence between the download address information and the download mode indicated by the model feedback information. For example, if the model feedback information indicates the download mode 1, a download address indicated by the download address information is an address 1. If the model feedback information indicates the download mode 2, the download address indicated by the download address information is an address 2. If the model feedback information indicates the download mode 3, the download address indicated by the download address information is an address 3. Other cases are deduced by analogy.

Model download license for downloading the first AI model: For example, when the model provider is in a private network or for a security purpose, the model provider may need the terminal device to provide the model download license before allowing downloading of the AI model. The model download license may be verification code, encrypted license information, or a license file. This is not limited in this disclosure.

In a possible implementation, S304 may be alternative replaced with the following step.

The access network device may send download failure information to the terminal device, where the download failure information, e.g. a download failure indication information, indicates that the AI model fails to be downloaded. For example, the terminal device indicates, by using the model capability information, that the download mode that is of the AI model and that is supported by the terminal device is downloading the AI model in the specified format. However, the access network device determines that the AI model in the specified format cannot be provided. In this case, the access network device may send the download failure information.

The download failure information may include a failure cause, and the failure cause may include at least one of the following.

Cause 1: The download mode is not supported. Specifically, an unsupported download mode may be indicated, for example, the download mode 1 is not supported.

Cause 2: The model does not need to be updated in a current channel environment. In this case, the terminal device may reuse a stored AI model.

Cause 3: The AI model has not been successfully trained.

Cause 4: Time at which the access network device receives the model requirement information exceeds validity duration of the model requirement information.

S305: The terminal device downloads the first AI model.

The terminal device may download the first AI model in a download mode configured for the terminal device, and the terminal device may determine, based on the download mode, a format of the first AI model provided by the network side. When the model feedback information includes the download address information, the terminal device may send a model obtaining request message to a model provider corresponding to the download address information. The model obtaining request message may include information, for example, the model download license and the identifier of the terminal device. The model obtaining request message may request to download the first AI model in the download mode indicated by the model feedback information.

Optionally, the model provider may send a model obtaining acknowledgment message to the terminal device.

The model obtaining acknowledgment message may include at least one of the following information:

(1) Request validity confirmation information: If it is determined to provide the first AI model for the terminal device, the request validity confirmation information may indicate confirmation of downloading the first AI model. If it is determined not to provide the first AI model for the terminal device, the request validity confirmation information may indicate a reason why the first AI model is not provided, for example, the model provider does not have the required first model, or validity time of the first AI model expires, or the model download license is inaccurate.

(2) Model information of the first AI model: For example, if the download mode indicated by the model feedback information is the $i^{th}$ download mode, the model information is an AI model file in the $i^{th}$ format. For another example, if the download mode indicated by the model feedback information is the download mode 1, the model information is an AI model file in the specified format, for example, a ".pb" file of Tensorflow. If the download mode indicated by the model feedback information is the download mode 2, the model information is computer code corresponding to the first AI model, for example, C++ code corresponding to the first AI model. If the download mode indicated by the model feedback information is the model download mode 3, the model information is an AI model file in the "intermediate format", for example, an ".onnx" file of ONNX.

(3) Model check mode for checking the first AI model: The terminal device may check integrity of the first AI model based on the model check mode indicated by the model obtaining acknowledgment message. A specific implementation of the model check mode is not limited in this disclosure. For example, the model check mode may be cyclic redundancy check (cyclic redundancy check, CRC), or may be another check mode.

Optionally, when receiving the model obtaining acknowledgment message, the terminal device may feed back an acknowledgment indication to the access network device, to indicate that downloading of the first AI model is completed.

According to the foregoing procedure, the terminal device reports the model capability information, indicates the download mode that is of the AI model and that is supported by the terminal device, and implements negotiation with the access network device on the download mode of the AI model, so that the access network device can provide the AI model for the terminal device based on the download mode that is of the AI model and that is supported by the terminal device, to avoid a case in which the terminal device cannot obtain an appropriate AI model when a machine learning model operator package and a format of an AI model on a network side do not match an operator package and a format of the AI model that are supported by the terminal.

In the foregoing procedure, it is described that the terminal device actively requests to the network side for downloading the AI model. In this disclosure, when the network side actively requests the terminal device to download or update the AI model, the terminal device may no longer report the model requirement information, in other words, the terminal device does not need to trigger downloading of the AI model. There may be a plurality of scenarios in which the network side actively requests the terminal device to download or update the AI model. For example, if the network side actively starts an air interface machine learning task, the terminal device needs to download a matching AI model.

If the network side changes an AI model of the network side, the terminal device also needs to change or download an adapted AI model. If the network side finds that a channel environment changes, the terminal device needs to change to an AI model that better matches a current channel environment to ensure performance. This is not limited in this application.

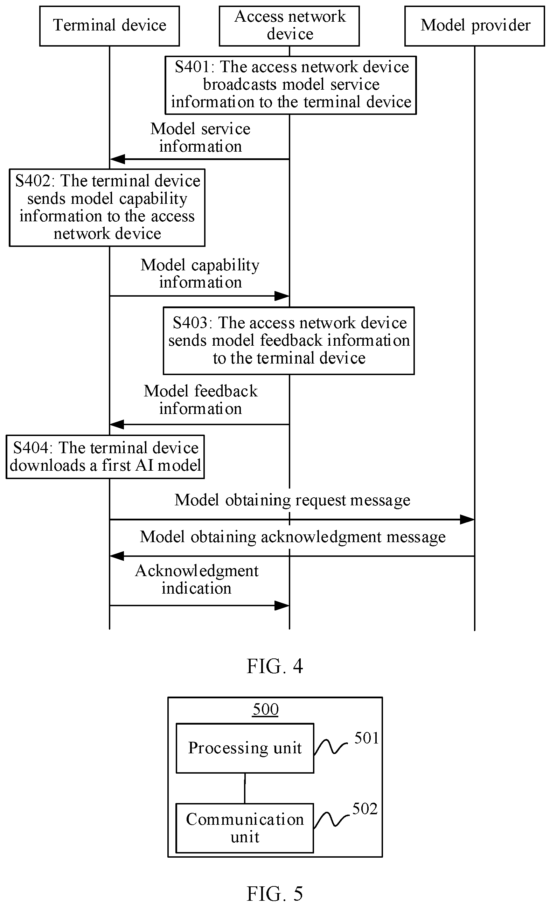

FIG. 4 is a schematic flowchart of an artificial intelligence model download method according to this disclosure. The procedure is described by using interaction between a terminal device and an access network device as an example. The method includes the following steps.

Optionally, S401: The access network device broadcasts model service information to the terminal device.

For a specific procedure, refer to the descriptions in S301. Details are not described herein again.

Optionally, S402: The terminal device sends model capability information to the access network device, where the model capability information indicates a supported download mode of an AI model.

For a specific procedure, refer to the descriptions in S302. Details are not described herein again.

S403: The access network device sends model feedback information to the terminal device.

For a specific procedure, refer to the descriptions in S304. Details are not described herein again. In addition to the information included in the model feedback information in S304, the model feedback information in S403 may further include at least one of the following information:

Function type of a first AI model: For specific content of the function type, refer to the foregoing descriptions. Details are not described herein again.

Application scenario information of the first AI model: For specific content of the application scenario information, refer to the foregoing descriptions. Details are not described herein again.

S404: The terminal device downloads the first AI model.

For a specific procedure, refer to the descriptions in S305. Details are not described herein again.

In the foregoing embodiments provided in this application, the method provided in embodiments of this application is described from a perspective of interaction between devices. To implement the functions in the methods provided in embodiments of this application, the access network device or the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 5, an embodiment of this application further provides a communication apparatus, configured to implement functions of the access network device, the terminal device, or the model provider in the foregoing method. For example, the communication apparatus may be a software module or a chip system. In this embodiment of this application, the chip system may include a chip, or may include a chip and another discrete component. The communication apparatus 500 may include: a processing unit 501 and a communication unit 502.

In this embodiment of this application, the communication unit may also be referred to as a transceiver unit, and may include a sending unit and/or a receiving unit, which are respectively configured to perform sending and receiving steps of the access network device or the terminal device in the foregoing method embodiments.

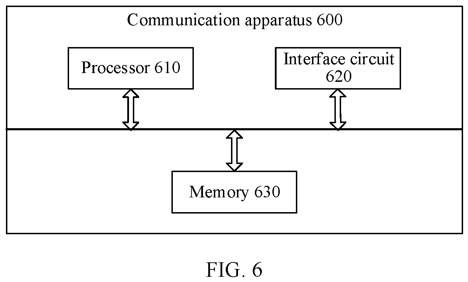

The following describes in detail communication apparatuses provided in embodiments of this application with reference to FIG. 5 and FIG. 6. It should be understood that descriptions of apparatus embodiments correspond to the descriptions of the method embodiments. Therefore, for content that is not described in detail, refer to the foregoing mode embodiments. For brevity, details are not described herein again.

The communication unit may also be referred to as a transceiver apparatus. A processing unit may also be referred to as a processing module, a processing apparatus, or the like. Optionally, a component that is in the communication unit 502 and that is configured to implement a receiving function may be considered as the receiving unit, and a component that is in the communication unit 502 and that is configured to implement a sending function may be considered as the sending unit. In other words, the communication unit 502 includes the receiving unit and the sending unit. The communication unit may be sometimes implemented as a transceiver machine, a transceiver, a transceiver circuit, or the like. The processing unit may be sometimes implemented as a processor, a processing board, or the like. The receiving unit may be sometimes implemented as a receiver machine, a receiver, a receiver circuit, or the like. The sending unit may be sometimes implemented as a transmitter machine, a transmitter, a transmitter circuit, or the like.

When the communication apparatus 500 performs the functions of the terminal device in the procedure shown in FIG. 3 or FIG. 4 in the foregoing embodiment,

the communication unit is configured to receive model feedback information from an access network device, the model feedback information indicates a download mode that is of a first artificial intelligence model and that is configured for a terminal device, and the download mode that is of the first artificial intelligence model and that is configured for the terminal device is a download mode supported by the terminal device; and

the processing unit may be configured to download the first artificial intelligence model in the download mode indicated by the model feedback information.

In a possible design, the communication unit is further configured to: send model capability information to the access network device, where the model capability information indicates a download mode that is of an artificial intelligence model and that is supported by the terminal device.

In a possible design, the communication unit is further configured to: send model requirement information to the access network device, where the model requirement information is used to trigger downloading of the first artificial intelligence model.

In a possible design, the communication unit is further configured to: receive download address information from the access network device, where the download address information indicates a download address of the first artificial intelligence model; download the first artificial intelligence model based on the download address.

When the communication apparatus 500 performs the function of the access network device in the procedure shown in FIG. 3 or FIG. 4 in the foregoing embodiment,

the communication unit is configured to send model feedback information to a terminal device, the model feedback information indicates a download mode that is of a first artificial intelligence model and that is configured for the terminal device, and the download mode that is of the first artificial intelligence model and that is configured for the terminal device is a download mode supported by the terminal device.

In a possible design, the communication unit is configured to receive model capability information from the terminal device, where the model capability information indicates a download mode that is of an artificial intelligence model and that is supported by the terminal device.

In a possible design, the communication unit is further configured to: receive model requirement information from the terminal device, where the model requirement information is used to trigger downloading of the first artificial intelligence model.

The foregoing is merely an example. The processing unit 501 and the communication unit 502 may further perform other functions. For more detailed descriptions, refer to related descriptions in the method embodiment shown in FIG. 3 or FIG. 4. Details are not described herein again.

FIG. 6 shows a communication apparatus 600 according to an embodiment of this application. The communication apparatus shown in FIG. 6 may be an implementation of a hardware circuit of the communication apparatus shown in FIG. 5. The communication apparatus is applicable to the foregoing flowchart, and performs a function of the terminal device or the access network device in the foregoing method embodiment. For ease of description, FIG. 6 shows only main components of the communication apparatus.

As shown in FIG. 6, a communication apparatus 600 includes a processor 610 and an interface circuit 620. The processor 610 and the interface circuit 620 are coupled to each other. It may be understood that the interface circuit 620 may be a transceiver, a pin, an interface circuit, or an input/output interface. Optionally, the communication apparatus 600 may further include a memory 630, configured to store instructions executed by the processor 610, store input data required by the processor 610 to run the instructions, or store data generated after the processor 610 runs the instructions. Optionally, a part or all of the memory 630 may be located in the processor 610.

When the communication apparatus 600 is configured to implement the method shown in FIG. 3 or FIG. 4, the processor 610 may be configured to implement a function of the processing unit 501, and the interface circuit 620 is configured to implement a function of the communication unit 502.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in an access network device, the chip in the access network device implements functions of the access network device in the foregoing method embodiments. The chip in the access network device receives information from another module (for example, a radio frequency module or an antenna) in the access network device, where the information is sent by a terminal device to the access network device. Alternatively, the chip in the access network device sends information to another module (for example, a radio frequency module or an antenna) in the access network device, where the information is sent by the access network device to a terminal device.

It may be understood that a processor in embodiments of this application may be a central processing unit, or may be another general purpose processor, a digital signal processor, an application-specific integrated circuit, or another programmable logic device, a transistor logic device, a hardware component, or any combination thereof. The general purpose processor may be a microprocessor or any regular processor or the like.

The memory in this embodiment of this application may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art may understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that, a person skilled in the art can make various modifications and variations to this application without departing from the scope of this application. This application is intended to cover these modifications and variations of this application provided that they fall within the scope of protection defined by the following claims and their equivalent technologies.

**Claims**

1. An artificial intelligence model download method, comprising:

    receiving model feedback information from an access network device, wherein the model feedback information indicates a download mode that is of a first artificial intelligence model and that is configured for a terminal device, and the download mode that is of the first artificial intelligence model and that is configured for the terminal device is a download mode supported by the terminal device; and
    downloading the first artificial intelligence model in the download mode that is of the first artificial intelligence model and that is configured for the terminal device.

2. The method according to claim 1, wherein the method further comprises:
    sending model capability information to the access network device, wherein the model capability information indicates a download mode that is of an artificial intelligence model and that is supported by the terminal device.

3. The method according to claim 2, wherein the download mode indicated by the model capability information comprises at least one of a first download mode to an $M^{th}$ download mode, wherein an $i^{th}$ download mode indicates that the terminal device supports an artificial intelligence model in an $i^{th}$ format, a value of i ranges from 1 to M, and M is an integer greater than or equal to 1.

4. The method according to claim 2, wherein the download mode indicated by the model capability information comprises at least one of the following:

    a download mode 1 of downloading an artificial intelligence model in a specified format;
    a download mode 2 of downloading computer code that describes an artificial intelligence model; or
    a download mode 3 of downloading an artificial intelligence model in an intermediate format, wherein the artificial intelligence model in the intermediate format can be converted into an artificial intelligence model in a format supported by the terminal device.

5. The method according to claim 4, wherein the specified format is comprised in M formats, and M is an integer greater than or equal to 1.

6. The method according to claim 4 or 5, wherein the model capability information further indicates parameter information corresponding to the download mode 1, wherein
the parameter information corresponding to the download mode 1 comprises model framework format information and/or operator package information; the model framework format information indicates at least one of a name of a model framework corresponding to the artificial intelligence model, a version number of the model framework, and a model file format of the artificial intelligence model; and the operator package information indicates an operator unit set of the artificial intelligence model.

7. The method according to any one of claims 4 to 6, wherein the model capability information further indicates parameter information corresponding to the download mode 2, wherein
the parameter information corresponding to the download mode 2 comprises at least one of a name of a programming language of the computer code that describes the artificial intelligence model and a version number of the programming language.

8. The method according to any one of claims 4 to 7, wherein the model capability information further indicates parameter information corresponding to the download mode 3, wherein
the parameter information corresponding to the download mode 3 comprises at least one of a format name of the intermediate format and a version number of the intermediate format.

9. The method according to any one of claims 1 to 8, wherein the method further comprises:
sending model requirement information to the access network device, wherein the model requirement information is used to trigger downloading of the first artificial intelligence model.

10. The method according to claim 9, wherein the model requirement information further indicates at least one of the following information:

a function type of the first artificial intelligence model;
application scenario information of the first artificial intelligence model;
information about time at which the first artificial intelligence model is requested to be used;
validity time information of the model requirement information; and
a stored artificial intelligence model.

11. The method according to any one of claims 1 to 10, wherein the model feedback information further indicates at least one of the following information:

effective time information of the first artificial intelligence model;
a model download license for downloading the first artificial intelligence model;
the function type of the first artificial intelligence model; and
the application scenario information of the first artificial intelligence model.

12. An artificial intelligence model download method, comprising:
sending model feedback information to a terminal device, wherein the model feedback information indicates a download mode that is of a first artificial intelligence model and that is configured for the terminal device, and the download mode that is of the first artificial intelligence model and that is configured for the terminal device is a download mode supported by the terminal device.

13. The method according to claim 12, wherein the method further comprises:
receiving model capability information from the terminal device, wherein the model capability information indicates a download mode that is of an artificial intelligence model and that is supported by the terminal device.

14. The method according to claim 13, wherein the download mode indicated by the model capability information comprises at least one of a first download mode to an $M^{th}$ download mode, wherein an $i^{th}$ download mode indicates that the terminal device supports an artificial intelligence model in an $i^{th}$ format, a value of i ranges from 1 to M, and M is an integer greater than or equal to 1.

15. The method according to claim 13, wherein the download mode indicated by the model capability information comprises at least one of the following:

a download mode 1 of downloading an artificial intelligence model in a specified format;
a download mode 2 of downloading computer code that describes an artificial intelligence model; and
a download mode 3 of downloading an artificial intelligence model in an intermediate format, wherein the artificial intelligence model in the intermediate format is obtained by converting a format of an artificial intelligence model supported by a network side.

16. The method according to claim 15, wherein the specified format is comprised in M formats, and M is an integer greater than or equal to 1.

17. The method according to claim 15 or 16, wherein the model capability information further indicates parameter information corresponding to the download mode 1, wherein
the parameter information corresponding to the download mode 1 comprises model framework format information and/or operator package information; the model framework format information indicates at least one of a name of a model framework corresponding to the artificial intelligence model, a version number of the model framework, and a model file format of the artificial intelligence model; and the operator package information indicates an operator unit set of the artificial intelligence model.

18. The method according to any one of claims 15 to 17, wherein the model capability information further indicates parameter information corresponding to the download mode 2, wherein
the parameter information corresponding to the download mode 2 comprises at least one of a name of a programming language of the computer code that describes the artificial intelligence model and a version number of the programming language.

19. The method according to any one of claims 15 to 18, wherein the model capability information further indicates parameter information corresponding to the download mode 3, wherein
the parameter information corresponding to the download mode 3 comprises at least one of a format name of the intermediate format and a version number of the intermediate format.

20. The method according to any one of claims 12 to 19, wherein the method further comprises:
receiving model requirement information from the terminal device, wherein the model requirement information is used to trigger downloading of the first artificial intelligence model.

21. The method according to claim 20, wherein the model requirement information further indicates at least one of the following information:

a function type of the first artificial intelligence model;
application scenario information of the first artificial intelligence model;
information about time at which the first artificial intelligence model is requested to be used;
validity time information of the model requirement information; and
a stored artificial intelligence model.

22. The method according to any one of claims 12 to 21, wherein the model feedback information further indicates at least one of the following information:

effective time information of the first artificial intelligence model;
a model download license for downloading the first artificial intelligence model;
the function type of the first artificial intelligence model; and
the application scenario information of the first artificial intelligence model.

23. An artificial intelligence model download method, comprising:

receiving a model obtaining request message from a terminal device, wherein the model obtaining request message requests to download a first artificial intelligence model in a first download mode; and

sending a model obtaining acknowledgment message to the terminal device, wherein the model obtaining acknowledgment message comprises model information of the first artificial intelligence model corresponding to the first download mode.

24. An artificial intelligence model download method, comprising:

sending a model obtaining request message, wherein the model obtaining request message requests to download a first artificial intelligence model in a first download mode; and
receiving a model obtaining acknowledgment message, wherein the model obtaining acknowledgment message comprises model information of the first artificial intelligence model.

25. The method according to claim 24, wherein the first download mode is indicated by model feedback information from an access network device.

26. A communication apparatus, comprising a unit configured to perform the method according to any one of claims 1 to 11 or claim 24 or 25.

27. A communication apparatus, comprising a processor and a memory, wherein the processor is coupled to the memory, and the processor is configured to perform the method according to any one of claims 1 to 11 or claim 24 or 25.

28. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor implements the method according to any one of claims 1 to 11 or claim 24 or 25 through the interface circuit.

29. A communication apparatus, comprising a unit configured to perform the method according to any one of claims 12 to 22 or claim 23.

30. A communication apparatus, comprising a processor and a memory, wherein the processor is coupled to the memory, and the processor is configured to perform the method according to any one of claims 12 to 22 or claim 23.

31. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor implements the method according to any one of claims 12 to 22 or claim 23 through the interface circuit.

32. A computer-readable storage medium, wherein the storage medium stores a computer program or instructions, and when the computer program or the instructions is/are run on a computer, the method according to any one of claims 1 to 11, the method according to any one of claims 12 to 22, the method according to claim 23, or the method according to claim 24 or 25 is implemented.

33. A computer program product, comprising a computer program or instructions, wherein when the computer program or the instructions is/are run on a computer, the method according to any one of claims 1 to 11, the method according to any one of claims 12 to 22, the method according to claim 23, or the method according to claim 24 or 25 is implemented.

34. A communication system, comprising the communication apparatus according to any one of claims 26 to 28, and the communication apparatus according to any one of claims 29 to 31.

FIG. 1

FIG. 2

FIG. 3

Terminal device    Access network device    Model provider

S401: The access network device broadcasts model service information to the terminal device

Model service information

S402: The terminal device sends model capability information to the access network device

Model capability information

S403: The access network device sends model feedback information to the terminal device

Model feedback information

S404: The terminal device downloads a first AI model

Model obtaining request message

Model obtaining acknowledgment message

Acknowledgment indication

FIG. 4

500

Processing unit        501

Communication unit      502

FIG. 5

FIG. 6

# EP 4 391 612 A1

<table>
<tr><td colspan="2" align="center"><strong>INTERNATIONAL SEARCH REPORT</strong></td><td colspan="2">International application No.<br><strong>PCT/CN2022/119070</strong></td></tr>
</table>

**A. CLASSIFICATION OF SUBJECT MATTER**

H04W 8/24(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC: 人工智能, 模型, 下载, 方式, 更新, 支持, 指示, 反馈, 指定, Artificial Intelligence, AI, Model, Download, Model, Update, Support, Indication, Feedback, Specification

**C. DOCUMENTS CONSIDERED TO BE RELEVANT**

| Category* | Citation of document, with indication, where appropriate, of the relevant passages | Relevant to claim No. |
|---|---|---|
| A | US 2020026977 A1 (SAMSUNG ELECTRONICS CO., LTD.) 23 January 2020 (2020-01-23) description, paragraphs 159-169, and figure 12 | 1-34 |
| A | WO 2018014737 A1 (SHENZHEN KUANG-CHI UNITED TECHNOLOGY CO., LTD.) 25 January 2018 (2018-01-25) entire document | 1-34 |
| A | CN 113222170 A (XRX NANJING INTELLIGENT IOT INSTITUTE, LTD.) 06 August 2021 (2021-08-06) entire document | 1-34 |
| A | US 2021048808 A1 (MICRON TECHNOLOGY INC.) 18 February 2021 (2021-02-18) entire document | 1-34 |
| A | US 2019279409 A1 (SAMSUNG ELECTRONICS CO., LTD.) 12 September 2019 (2019-09-12) entire document | 1-34 |
| A | CN 112204532 A (HUAWEI TECHNOLOGIES CO., LTD.) 08 January 2021 (2021-01-08) entire document | 1-34 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 November 2022** | **28 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/119070**

C.    DOCUMENTS CONSIDERED TO BE RELEVANT

| Category* | Citation of document, with indication, where appropriate, of the relevant passages | Relevant to claim No. |
|---|---|---|
| A | CN 110378463 A (BEIJING ZHINENG GONGCHANG TECHNOLOGY CO., LTD.) 25 October 2019 (2019-10-25)<br>      entire document | 1-34 |

Form PCT/ISA/210 (second sheet) (January 2015)

**INTERNATIONAL SEARCH REPORT**
Information on patent family members

International application No.

**PCT/CN2022/119070**

| Patent document cited in search report | | | Publication date (day/month/year) | Patent family member(s) | | | Publication date (day/month/year) |
|---|---|---|---|---|---|---|---|
| US | 2020026977 | A1 | 23 January 2020 | WO | 2020017898 | A1 | 23 January 2020 |
| | | | | KR | 20200013162 | A | 06 February 2020 |
| | | | | EP | 3756145 | A1 | 30 December 2020 |
| | | | | CN | 112424799 | A | 26 February 2021 |
| WO | 2018014737 | A1 | 25 January 2018 | CN | 107644255 | A | 30 January 2018 |
| CN | 113222170 | A | 06 August 2021 | None | | | |
| US | 2021048808 | A1 | 18 February 2021 | CN | 112465156 | A | 09 March 2021 |
| US | 2019279409 | A1 | 12 September 2019 | WO | 2019177344 | A1 | 19 September 2019 |
| CN | 112204532 | A | 08 January 2021 | WO | 2020042112 | A | 05 March 2020 |
| CN | 110378463 | A | 25 October 2019 | None | | | |

Form PCT/ISA/210 (patent family annex) (January 2015)

**EP 4 391 612 A1**

**REFERENCES CITED IN THE DESCRIPTION**

**Patent documents cited in the description**

- CN 202111112900